# FASCICULE DE BREVET EUROPEEN

(11) **EP 3 601 009 B1**
(45) Date de publication et mention de la délivrance du brevet: **21.04.2021**
(21) Numéro de dépôt: 18712257.7
(22) Date de dépôt: 27.03.2018
(51) Int. Cl.: B61K 9/08

(54) **DISPOSITIF DE DÉTECTION DE DÉFAUTS D'UN RAIL ET PROCÉDÉ DE DÉTECTION ASSOCIÉ**
VORRICHTUNG ZUR DETEKTION VON SCHIENENDEFEKTEN UND ZUGEHÖRIGES DETEKTIONSVERFAHREN
DEVICE FOR DETECTING RAIL DEFECTS AND ASSOCIATED DETECTION METHOD

(30) Priorité: 29.03.2017 FR 1752635
(43) Date de publication de la demande: 05.02.2020
(73) Titulaire: Metrolab, 75015 Paris (FR)
(72) Inventeur: MARICHAL, Benoît, 75010 Paris (FR); NASR, Sarah, 75010 Paris (FR)
(74) Mandataire: Lavoix
(86) Numéro de dépôt international: PCT/EP2018/057815
(87) Numéro de publication internationale: WO 2018/178097

(56) Documents cités:
- EP-A2- 0 235 602
- DE-B3-102012 106 102
- FR-A1- 2 341 701

## Description

La présente invention concerne un dispositif de détection de défauts d'un rail, du type comportant : au moins un ensemble de capteurs, chacun desdits capteurs étant apte à générer un signal électrique représentatif d'une distance séparant ledit capteur et le rail, et au moins un véhicule ferroviaire apte à se déplacer le long du rail ; l'ensemble de capteurs étant assemblé au véhicule ferroviaire ; le véhicule ferroviaire étant configuré pour reposer sur le rail de sorte que lesdits capteurs soient disposés en regard et à distance dudit rail.

L'invention s'applique particulièrement à la détection des défauts d'une surface supérieure du rail. Les défauts surfaciques présentent un fort potentiel de dégradation vers l'âme du rail et peuvent dégénérer vers une rupture complète de la section. Une surveillance fréquente de la surface du rail présente donc un grand intérêt pour conserver une vision globale de la qualité d'un réseau ferroviaire. Il est ainsi possible de planifier ou déclencher les actions de maintenance corrective nécessaires lorsque l'état d'une section de rail apparaît comme trop dégradé, ou des actions de maintenance préventive lorsque l'état d'une section de rail présente le risque de dégénérer vers un état nécessitant une maintenance lourde, comme par exemple le remplacement du coupon de rail endommagé.

Plusieurs méthodes sont connues de l'art antérieur pour détecter les défauts de rails. Un procédé mettant en œuvre des capteurs de métrologie dimensionnelle est notamment décrit dans le document EP0044885. Ce document décrit un ensemble de capteurs suspendu à un véhicule ferroviaire en contact avec la voie par l'intermédiaire de quatre roues Un dispositif de détection de ce genre est connu également du document EP 0 235 602 A2.

Un tel dispositif expose cependant les capteurs à un niveau de vibrations pouvant dépasser de plusieurs ordres de grandeur la résolution des capteurs. Les mesures obtenues sont ensuite difficiles à corriger.

La présente invention a pour but de proposer un dispositif de détection conduisant à des mesures plus fiables, permettant de détecter et de caractériser les défauts de la surface supérieure d'un rail.

A cet effet, l'invention a pour objet un dispositif de détection du type précité, ayant les caractéristiques de la revendication.

Suivant d'autres aspects avantageux de l'invention, le dispositif de détection comporte l'une ou plusieurs des caractéristiques suivantes, prises isolément ou suivant toutes les combinaisons techniquement possibles :
- l'au moins un ensemble de capteurs comporte au moins un rang de capteurs alignés selon une direction transversale, perpendiculaire à la direction longitudinale du patin de frottement ;
- l'au moins un ensemble de capteurs comporte plusieurs rangs, chaque rang étant formé de capteurs alignés selon une direction transversale perpendiculaire à la direction longitudinale du patin de frottement ;
- les capteurs de l'au moins un ensemble sont disposés selon un maillage régulier, formé de droites s'étendant selon la direction transversale et de droites s'étendant selon une direction inclinée d'un angle par rapport à ladite direction transversale, ledit angle étant préférentiellement compris entre 45° et 90° ;
- le patin de frottement comprend en outre au moins une rainure ménagée dans la surface inférieure selon la direction longitudinale, l'au moins une rainure débouchant sur l'au moins une cavité ;
- le patin de frottement est assemblé au véhicule ferroviaire par une suspension munie de moyens de maintien fixes d'une position transversale constante d'au moins un ensemble de capteurs par rapport au chariot ;
- le patin de frottement est assemblé au véhicule ferroviaire par une suspension munie de moyens de maintien par asservissement d'une position transversale constante de l'au moins un ensemble de capteurs par rapport à un bord du rail ;
- le dispositif de traitement comporte plusieurs contrôleurs embarqués solidaires d'un même véhicule ferroviaire ou de plusieurs véhicules ferroviaires différents, chaque contrôleur embarqué étant connecté à un ensemble de capteurs, le dispositif de traitement comprenant en outre un calculateur centralisé muni de moyens de communication avec chacun des calculateurs embarqués.

L'invention a également pour objet un procédé de fonctionnement d'un dispositif de détection tel que décrit ci-dessus, ledit procédé comportant les étapes suivantes : déplacement du véhicule ferroviaire le long du rail ; au cours dudit déplacement, mesure d'une distance entre les capteurs de l'au moins un ensemble et une surface supérieure du rail ; et détection simultanée des coordonnées spatiales et de la vitesse du véhicule ; puis élaboration d'une première représentation spatiale de la surface supérieure du rail ; puis comparaison de ladite première représentation spatiale avec des représentations de référence afin d'identifier des défauts de la surface supérieure ; puis génération d'une alerte en cas de défaut identifié.

Suivant d'autres aspects avantageux de l'invention, le procédé comporte l'une ou plusieurs des caractéristiques suivantes, prises isolément ou suivant toutes les combinaisons techniquement possibles :
- le procédé comprend en outre une étape de comparaison de la première représentation spatiale avec une seconde représentation spatiale précédemment mémorisée dans une mémoire de données, de sorte à conduire à un suivi de l'évolution des défauts de la surface supérieure ;
- les représentations de référence comprennent plusieurs types de défauts associés à des caractéristiques spatiales et dans lequel l'étape de comparaison comprend la détermination de fenêtres d'analyse correspondant auxdites caractéristiques spatiales.

L'invention sera mieux comprise à la lecture de la description qui va suivre, donnée uniquement à titre d'exemple non limitatif et faite en se référant aux dessins sur lesquels :
- la figure 1 est une vue schématique latérale d'un dispositif de détection selon un premier mode de réalisation de l'invention ;
- la figure 2 est une vue partielle, en coupe, du dispositif de la figure 1 ;
- la figure 3 est une vue de détail, de dessous, d'une variante de réalisation du dispositif de la figure 1 ;
- les figures 4 et 5 sont des vues schématiques de détail d'un dispositif de détection selon un deuxième mode de réalisation de l'invention comportant un système d'asservissement de position ;
- la figure 6 est une vue schématique d'un élément du dispositif de la figure 1 ; et
- la figure 7 est un logigramme correspondant à un procédé de fonctionnement d'un dispositif de détection tel que le dispositif de la figure 1.

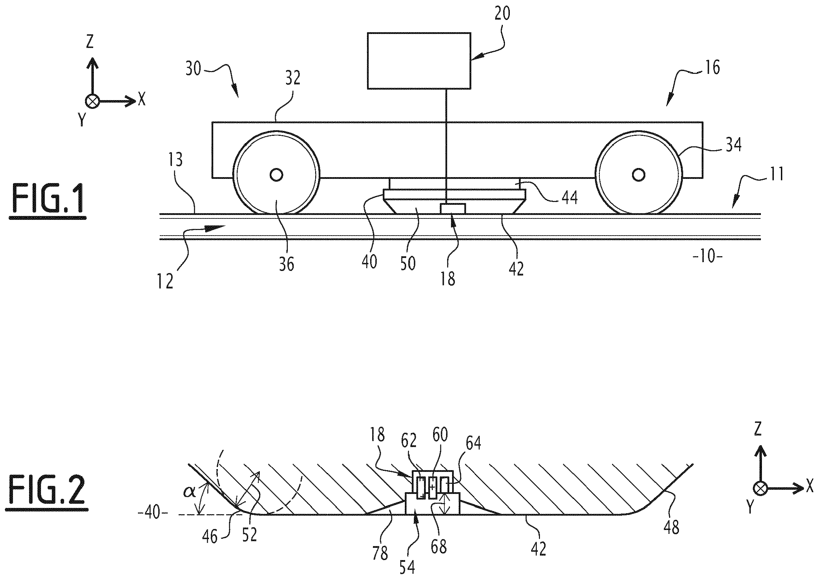

La figure 1 représente schématiquement un dispositif 10 de détection de défauts d'un rail selon un mode de réalisation de l'invention.

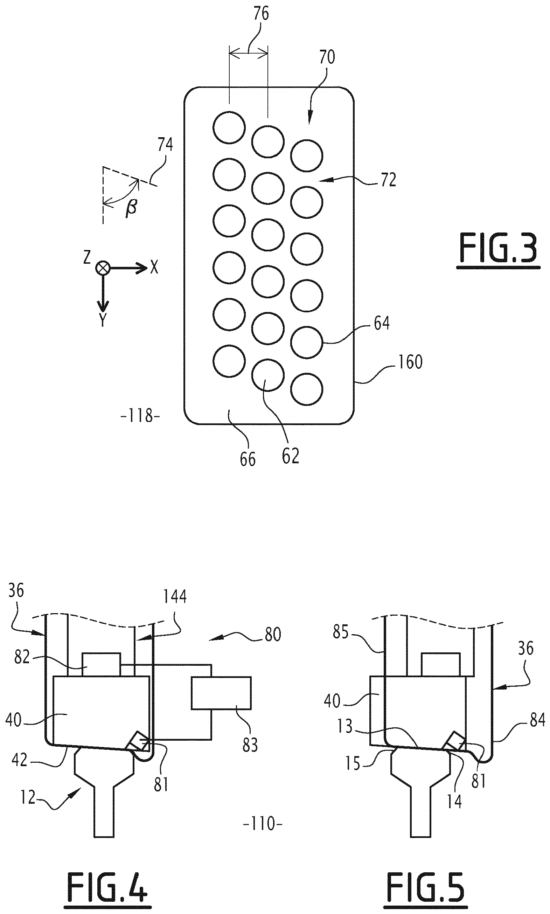

Le dispositif 10 est notamment apte à détecter les défauts d'une voie ferrée 11 formée de deux rails 12 sensiblement parallèles. Un rail 12 comporte notamment une surface supérieure 13 délimitée par un bord interne 14 et un bord externe 15 (Fig. 5). Le bord interne 14 est le bord orienté vers l'intérieur de la voie ferrée 11, c'est-à-dire qui fait face à l'autre rail 12 de ladite voie ferrée.

Le dispositif 10 est particulièrement destiné à la détection des défauts de la surface supérieure 13 d'au moins un rail 12.

Les défauts attendus peuvent présenter des caractéristiques spatiales très différentes. Les défauts de type usure ondulatoire s'étendent sur une longueur importante. Au contraire, des défauts de type squat ou shelling sont des défauts de petite taille. Il existe également des défauts de taille intermédiaire telle que des délaminages.

Le dispositif 10 comporte notamment un véhicule ferroviaire 16, au moins un ensemble 18 de capteurs reliés audit véhicule 16 et un dispositif 20 de traitement électronique des informations fournies par lesdits capteurs.

Le véhicule ferroviaire 16 est de préférence un véhicule de transport, notamment de type train, métro, tramway ou RER. En variante, le véhicule ferroviaire 16 est un véhicule de mesure ou de maintenance, motorisé ou encore déplaçable manuellement.

Le véhicule ferroviaire 16 comprend au moins un chariot 30. Ledit chariot 30 comporte un châssis 32 relié à quatre roues, notamment deux roues avant 34 et deux roues arrière 36. Le véhicule ferroviaire 16 est apte à se déplacer le long de la voie ferrée 11 de sorte que chacune des roues avant 34 roule sur un rail 12 différent et que chacune des roues arrière 36 roule sur un rail 12 différent.

De préférence, les chariots 30 forment au moins un des bogies du véhicule ferroviaire 16, de sorte qu'un même véhicule ferroviaire 16 comprend plusieurs chariots 30.

La figure 1 montre une base orthonormée (X, Y, Z) associée au chariot 30. La direction X représente une direction longitudinale de déplacement du chariot 30, la direction Y représente une direction transversale et la direction Z représente la verticale.

Le chariot 30 comporte en outre au moins un patin de frottement 40, comprenant notamment une surface inférieure 42 sensiblement plane. Le patin de frottement 40 est disposé sous le châssis 32, entre une roue avant 34 et une roue arrière 36. Le chariot 30 comporte en outre au moins une suspension 44 reliant le patin de frottement 40 au châssis 32, de manière à ce que le déplacement du chariot 30 sur la voie ferrée 11 entraîne un glissement de la surface inférieure 42 sur l'un des rails 12.

De préférence, le patin de frottement 40 et la suspension 44 sont sensiblement à égale distance de la roue avant 34 et de la roue arrière 36, de sorte que la direction longitudinale X soit sensiblement tangente au rail 12 au milieu du patin de frottement 40.

De préférence, le chariot 30 comporte au moins deux patins de frottement 40, chacun desdits patins étant disposé à l'aplomb de l'un des rails 12 de la voie ferrée 11.

La figure 2 montre une vue de détail, en coupe, du patin de frottement 40 de la figure 1.

La surface inférieure 42 est disposée selon un plan (X, Y) et est délimitée par un bord 46, de forme sensiblement rectangulaire. A titre indicatif, une longueur de la surface inférieure 42 selon la direction longitudinale X est comprise entre 50 cm et 1,5 m. Ladite longueur est préférentiellement adaptée en fonction de la taille des défauts attendus, notamment de la longueur d'onde des usures ondulatoires. Une largeur de la surface inférieure 42 selon la direction transversale Y est choisie de préférence proche d'une largeur des roues 34, 36.

Le bord 46 est contigu à deux faces frontales 48 et à deux faces latérales 50 du patin de frottement 40. De préférence, les faces frontales 48 et latérales 50 sont sensiblement planes.

Les faces frontales 48 sont disposées à l'avant et à l'arrière du patin de frottement 40, selon la direction longitudinale X. De préférence, les faces frontales 48 sont sensiblement planes et inclinées d'un angle α inférieur à 45° par rapport à l'horizontale. De préférence, les faces latérales 50 sont sensiblement disposées selon des plans (X, Z).

Le bord 46 forme une surface courbe entre la surface inférieure 42 d'une part et les faces frontales 48 et latérales 50 d'autre part. Un rayon de courbure 52 du bord 46 est de préférence compris entre 5 mm et 50 mm.

Le patin de frottement 40 comprend en outre une cavité 54 ménagée dans la surface inférieure 42. La cavité 54 est préférentiellement de forme allongée, s'étendant selon la direction transversale Y. Selon un mode de réalisation, la cavité 54 débouche sur les faces latérales 50. Selon un autre mode de réalisation, la cavité 54 est entièrement contenue dans la surface inférieure 42.

La figure 3 montre une vue de dessous d'un ensemble 118 de capteurs pouvant remplacer l'ensemble 18 dans une variante de réalisation du dispositif des figures 1 et 2. Les ensembles 18 et 118 seront décrits simultanément, les éléments communs étant désignés par les mêmes numéros de référence.

L'ensemble 18, 118 de capteurs comprend notamment un bloc support 60, 160 et des capteurs 62, 64. Le bloc support 60, 160 a une forme sensiblement parallélépipédique et comporte notamment une face inférieure 66.

Les capteurs 62, 64 sont des capteurs de métrologie dimensionnelle, chaque capteur étant apte à générer un signal électrique représentatif d'une distance séparant ledit capteur et le rail 12 correspondant. Les capteurs 62, 64 sont par exemple choisis parmi des capteurs capacitifs, des capteurs optiques et des capteurs inductifs, notamment à courants de Foucault.

Les capteurs 62, 64 sont insérés dans le bloc support 60, 160. Selon un mode de réalisation, au moins un capteur 62 forme une saillie par rapport à la face inférieure 66 dudit bloc support. Selon un mode de réalisation, au moins un capteur 64 affleure la face inférieure 66 dudit bloc support. La position des capteurs par rapport à la face inférieure 66 est notamment choisie en fonction de la nature desdits capteurs, par exemple, pour éviter l'influence des masses métalliques trop proches du point chaud des capteurs sur leur mesure.

Le bloc support 60, 160 est logé dans la cavité 54 du patin de frottement, la face inférieure 66 étant orientée vers le bas de sorte à se trouver en vis-à-vis de la surface supérieure 13 du rail 12. Le bloc support 60, 160 est disposé de sorte à ménager une distance 68 non nulle, entre les capteurs 62, 64 et la surface inférieure 42 du patin de frottement 40. Ladite surface inférieure 42 fournit ainsi un plan de référence commun à tous les capteurs 62, 64.

Ladite distance 68 est choisie la plus petite possible en fonction des caractéristiques des capteurs et de l'usure anticipée de la surface inférieure 42 du patin de frottement 40. Par exemple, pour des capteurs inductifs, la distance 68 est choisie du même ordre de grandeur qu'un diamètre desdits capteurs.

De préférence, l'ensemble 18, 118 de capteurs est configuré de sorte à couvrir la plus grande partie possible de la largeur du rail 12, afin de détecter la plus grande part possible de défauts.

Plus précisément, les capteurs 62, 64 sont de préférence disposés selon au moins un rang 70 de capteurs alignés selon la direction transversale Y. Afin d'augmenter la résolution de la détection, les capteurs sont plus préférentiellement disposés selon plusieurs rangs. Dans les modes de réalisation des figures 2 et 3, les ensembles 18 et 118 comportent trois rangs de capteurs alignés selon la direction transversale Y.

De préférence, les capteurs 62, 64 sont répartis sur la face inférieure 66 selon un maillage régulier 72 (Fig. 3), formé de droites s'étendant selon la direction transversale Y et de droites s'étendant selon une direction 74, inclinée d'un angle β compris entre 45° et 90° par rapport à ladite direction transversale. Une telle disposition permet notamment de minimiser une distance 76 entre deux rangs 70 de capteurs consécutifs et donc d'optimiser le nombre de capteurs sur la face inférieure 66.

Le patin de frottement 40 comprend en outre au moins une rainure de drainage 78 ménagée dans la surface inférieure 42 selon la direction longitudinale X. Ladite rainure de drainage 78 débouche sur la cavité 54 et s'étend de préférence en avant et en arrière de ladite cavité de façon à permettre une opération dans les deux sens de la direction X.

Selon une variante au mode de réalisation de la figure 2, le patin de frottement 40 comprend plusieurs cavités 54, réparties selon la direction longitudinale X, chacune des cavités renfermant un ensemble 18, 118 de capteurs.

Les figures 4 et 5 montrent des vues schématiques de détail, de face, d'un dispositif de détection 110 similaire au dispositif 10 de la figure 1. Le dispositif 110 correspond à la description ci-dessus du dispositif 10 mais comporte une suspension 144 différente de la suspension 44. Les suspensions 44 et 144 seront décrites simultanément, les éléments communs étant désignés par les mêmes numéros de référence.

La suspension 44, 144 est configurée pour exercer sur le patin de frottement 40 un effort vertical dirigé vers le rail 12, soit vers le bas, tout en limitant la course vers le bas dudit patin afin de l'empêcher de descendre sous le plan de la voie. Par ailleurs, la suspension 44, 144 comprend des moyens de rappel élastique afin d'absorber les mouvements verticaux du patin qui peuvent être causés par des irrégularités de la voie ferrée 11 ou par le passage sur des appareils de voie.

Dans le mode de réalisation de la figure 1, la suspension 44 est configurée de sorte que le patin de frottement 40 est fixe par rapport au châssis 32 dans la direction transversale Y. De préférence, ce positionnement est tel qu'en vue de face, le patin est totalement dans l'ombre des roues 34, 36. Dans cette réalisation, il est préférable que l'entraxe des roues 34, 36 soit réduit afin de limiter le déplacement de l'axe du patin de frottement 40 par rapport à la tangente au rail 12 correspondant.

Dans le mode de réalisation des figures 4 et 5, la suspension 144 comporte un dispositif 80 d'asservissement de la position du patin 40 au-dessus du rail 12. Le dispositif d'asservissement 80 n'est pas visible sur la figure 5. Les figures 4 et 5 montrent respectivement deux configurations différentes du dispositif de détection 110, selon la position transversale de la roue arrière 36 par rapport au rail 12.

Le dispositif d'asservissement 80, représenté sur la figure 4, comporte un détecteur 81, un organe de translation 82 et un module électronique d'asservissement 83.

Le détecteur 81 est apte à détecter la position du patin par rapport au rail dans la direction transversale Y. Le détecteur 81 est par exemple un capteur de métrologie dimensionnelle analogue aux capteurs 62, 64. Le détecteur 81 est de préférence disposé dans un puits débouchant à la surface inférieure 42 du patin de frottement 40.

L'organe de translation 82 est apte à déplacer le patin de frottement 40 par rapport au châssis 32 dans la direction transversale Y. L'organe de translation 82 comporte par exemple un moteur électrique et une vis sans fin engagée dans un jeu d'engrenages relié au patin.

Le module électronique d'asservissement 83 est apte à interpréter les données issues du détecteur 81 pour commander l'organe de translation 82 afin que le patin de frottement 40 conserve une même position par rapport au bord interne 14 du rail 12 dans la direction transversale Y. Ladite position est choisie de sorte à optimiser la position des capteurs 62, 64 par rapport à la surface supérieure 13 dudit rail 12. De préférence, ladite position implique que tous les capteurs 62, 64 d'au moins un ensemble 18, 118 porté par le patin 40 soient à la verticale de ladite surface supérieure 13.

De préférence, la course du patin 40 autorisée par l'organe de translation 82 est limitée de sorte que ledit patin ne puisse pas former de saillie par rapport à une face interne 84 des roues 34, 36, c'est-à-dire une face des roues orientée vers l'intérieur de la voie ferrée 11. Comme sur la figure 5, le patin 40 est de préférence autorisé à dépasser la face externe 85 des roues 34, 36, opposée à la face interne. Ce dépassement est toutefois contenu dans la limite autorisée par le gabarit défini par la norme UIC 505-1.

Le mode de réalisation des figures 4 et 5 nécessite un appareillage supplémentaire pour le dispositif d'asservissement 80 mais il permet en contrepartie d'économiser sur le nombre de capteurs 62, 64 car ces derniers sont maintenus en totalité au-dessus du rail.

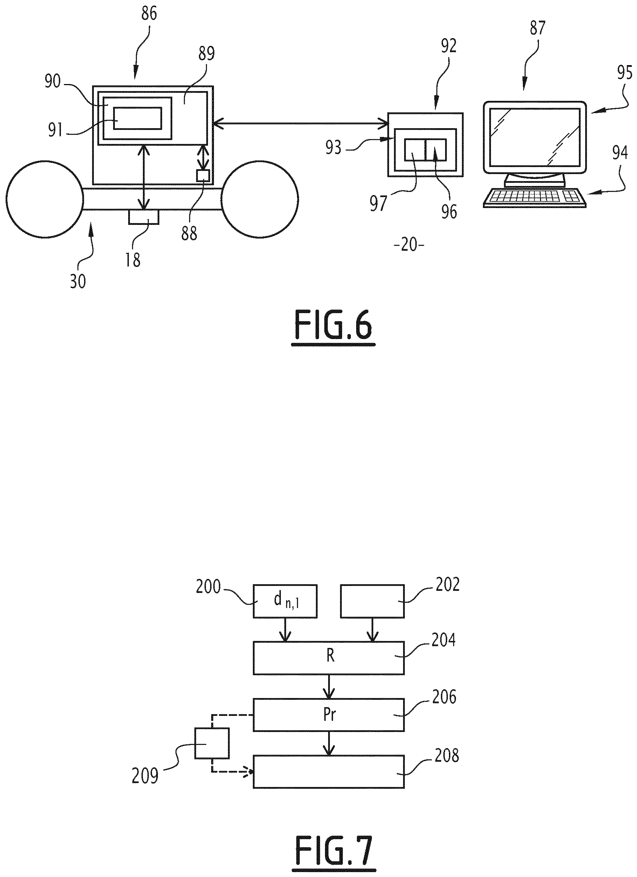

Le dispositif de traitement 20 est représenté schématiquement à la figure 6. Le dispositif de traitement 20 comporte au moins un dispositif embarqué 86, solidaire du véhicule ferroviaire 16, et un dispositif au sol 87. Un même dispositif embarqué 86 est relié à un ou plusieurs patins de frottement 40. Le nombre de dispositifs embarqués 86 dans un même véhicule ferroviaire 16 dépendra donc du nombre de patins de frottement 40 et de la capacité du dispositif embarqué 86.

Le dispositif embarqué 86 comporte un détecteur électronique 88 de coordonnées spatiales du véhicule ferroviaire 16 permettant de connaître les coordonnées spatiales des centres du (des) chariot(s) 30 géré(s) par ledit dispositif embarqué 86. Lesdites coordonnées spatiales sont, par exemple, la longitude et la latitude du détecteur 88, qui est préférentiellement relié à un système de type GPS. Le détecteur 88 est de préférence disposé à proximité d'au moins un ensemble 18, 118 de capteurs. Le détecteur électronique 88 est également apte à mesurer la vitesse longitudinale du (des) chariot(s) 30.

Chaque dispositif embarqué 86 comporte en outre au moins un contrôleur embarqué 89. Le contrôleur embarqué 89 comporte un processeur 90 qui mémorise un programme 91. Le contrôleur embarqué 89 est muni de moyens de communication avec le détecteur 88 de coordonnées spatiales, avec les capteurs 62, 64 d'au moins un ensemble 18, 118 solidaire du chariot 30, et avec le dispositif d'asservissement 80 le cas échéant.

Le dispositif au sol 87 comporte un calculateur central 92 tel qu'un ordinateur. Le calculateur central 92 comprend un processeur 93, une interface homme-machine 94 telle qu'un clavier et une unité d'affichage 95 telle qu'un écran. Le processeur 93 mémorise un programme 96. Dans un mode de réalisation, le dispositif au sol 87 comporte en outre une mémoire de données 97, apte à enregistrer les données collectées sur une durée définie.

Le dispositif au sol 87 comporte en outre des moyens de communication, par exemple par ondes radio, avec le(s) dispositif(s) embarqué(s) 86 du véhicule 16.

Un procédé de fonctionnement du dispositif de détection 10, 110 va maintenant être décrit. Ledit procédé est schématiquement représenté par un logigramme à la figure 7.

On considère que pour chaque ensemble 18, 118 de capteurs, chacun des capteurs 62, 64 correspond à un identifiant Cₙ dans le programme 91 du dispositif embarqué 86 relié audit ensemble 18, 118. Chaque identifiant Cₙ est rattaché à une position du capteur correspondant sur la face interne 66 du bloc support 60, 160.

Tout d'abord, le véhicule ferroviaire 16 se déplace sur la voie ferrée 11. Le ou chaque patin de frottement 40 du ou de chaque chariot 30 glisse le long du rail 12 correspondant.

La suspension 44, 144 facilite au patin 40 le franchissement des appareils de voie. De même, la forme recourbée du bord 46 de la surface inférieure 42 permet de réduire les chocs subis à l'abord des irrégularités de la voie, de tels chocs pouvant perturber les mesures effectuées par les capteurs 62, 64.

En fonction de la technologie utilisée, ces mesures peuvent également être sensibles aux conditions climatiques telles que l'humidité. Durant le déplacement du patin 40, les rainures de drainage 78 contribuent à éviter l'accumulation d'eau dans la cavité 54.

Au cours dudit déplacement, les capteurs 62, 64 du ou de chaque ensemble 18, 118 fournissent au dispositif embarqué 86 des informations sur une distance d_{n,i} de chaque capteur Cₙ par rapport à la surface supérieure 13 du rail 12, à chaque instant tᵢ (étape 200).

Dans le cas du dispositif 10 précédemment décrit, comprenant une suspension 44, la position de l'ensemble 18, 118 de capteurs peut varier par rapport aux bords interne 14 et externe 15 du rail 12. De préférence, l'ensemble 18, 118 est suffisamment étendu dans la direction transversale Y pour que les capteurs 62, 64 détectent la position d'au moins l'un des bords interne 14 et externe 15. En particulier, les capteurs situés au-dessus du vide, donc à l'écart du rail 12, envoient un signal saturé au calculateur embarqué 89. La position des irrégularités de la surface supérieure 13 par rapport aux bords 14, 15 du rail est une information qui contribue à caractériser le type de défaut en cause.

Dans le cas du dispositif 110 précédemment décrit, comprenant une suspension 144, la position de l'ensemble 18, 118 de capteurs est en principe fixe par rapport aux bords du rail. La détection d'au moins un desdits bords peut toutefois être effectuée à titre de confirmation.

Simultanément aux mesures effectuées par les capteurs 62, 64, le détecteur électronique 88 du ou de chaque dispositif embarqué 86 détermine les coordonnées spatiales du ou de chaque chariot 30 à plusieurs instants tᵢ successifs (étape 202).

Le détecteur électronique 88 mesure également la vitesse du chariot 30 à chaque instant tᵢ, ce qui permet au programme 91 de convertir en décalage temporel la distance 76 entre deux rangs 70 de capteurs. Les mesures des différents rangs de capteurs d'un même ensemble 18, 118 sont ainsi synchronisées, de manière à former virtuellement un seul alignement transversal à forte densité de capteurs Cₙ.

Les coordonnées spatiales du chariot 30 à plusieurs instants tᵢ, combinées aux distances d_{n,i} mesurées par les capteurs Cₙ, permet de définir (étape 204) une représentation spatiale R de la (des) surface(s) supérieure(s) 13 sur laquelle s'est déplacé le véhicule ferroviaire 16. La représentation spatiale R est définie par le programme 91 du ou de chaque dispositif embarqué 86 et/ou par le programme 96 du dispositif au sol 87.

Préférentiellement, le dispositif de détection 10, 110 offre un ou plusieurs niveaux de redondance permettant d'affiner ladite représentation spatiale R. Un premier niveau peut être obtenu par le dispositif embarqué 86 ou par le dispositif au sol 87 dans le cas où un même patin de frottement 40 loge plusieurs ensembles 18, 118 de capteurs, reliés à un même dispositif embarqué 86.

Un deuxième niveau de redondance est obtenu par le dispositif au sol 87, dans le cas où le véhicule ferroviaire 16 comporte plusieurs chariots 30, chacun desdits chariots étant équipé d'un dispositif embarqué 86 relié au dispositif au sol 87.

Un troisième niveau de redondance est obtenu par le dispositif au sol 87 dans le cas où plusieurs véhicules ferroviaires 16 se déplacent sur la voie ferrée 11 ou dans le cas où un même véhicule ferroviaire 16 effectue le même trajet plusieurs fois de suite.

La représentation spatiale R est ensuite analysée (étape 206) de manière à détecter les défauts de la (des) surface(s) supérieure(s) 13. Cette étape d'analyse est effectuée par le programme 91 du ou de chaque dispositif embarqué 86 et/ou par le programme 96 du dispositif au sol 87.

A titre d'exemple, l'étape d'analyse 206 comporte les opérations suivantes :
- pour chaque ensemble 18, 118 de capteurs, calculer un profil transversal de référence Pᵣ de la surface supérieure 13. Le profil Pᵣ est calculé en effectuant la moyenne des distances d_{n,i} mesurées par les capteurs Cₙ sur une plage d'instants tᵢ successifs. Cette opération permet de définir, pour chaque capteur d'un ensemble 18, 118, un niveau de référence relatif à la section de rail en cours de parcours et donne également une indication sur l'usure de la (des) surface(s) supérieure(s) 13 du rail ;
- pour chaque ensemble 18, 118, mémoriser des fenêtres de signal correspondant chacune à une distance d'examen différente, en vue d'identifier des défauts différents. Par exemple, une fenêtre « longue » de 5 m de longueur contiendra suffisamment d'informations pour identifier des défauts longs de type usure ondulatoire. Une fenêtre « moyenne » de 0,5 m de longueur contiendra suffisamment d'informations pour identifier des défauts de congé de type délaminage. Une fenêtre « courte » de 0,1 à 0,2m de longueur contiendra suffisamment d'informations pour identifier des défauts locaux tels que les squats et les shellings ;
- pour chaque fenêtre, calculer une somme quadratique des écarts au profil de référence Pᵣ et comparer ces sommes à des valeurs témoin représentatives du bruit qui peut être rencontré sur les rails. Tout résultat supérieur à une valeur témoin déclenchera une analyse de défaut ;
- pour la fenêtre à analyser, extraire des mesures les paramètres pertinents pour la fenêtre en question. Pour la fenêtre longue, il peut s'agir des fréquences spatiales des mesures pour lesquelles un maximum local est trouvé dans le spectre de puissance spectrale du signal du capteur le plus proche du centre de la file de rail. Pour la fenêtre moyenne et la fenêtre courte, il peut s'agir du contour de la zone pour laquelle l'écart au profil de référence dépasse deux ou trois écarts-types ;
- comparer les paramètres ainsi extraits à des données de référence, mémorisées préférentiellement dans le calculateur central 92, afin de déterminer le type de défaut. Ladite opération de comparaison est de préférence assortie d'une probabilité exprimant la confiance à placer dans l'identification du défaut. Les paramètres ainsi extraits permettent en outre de déterminer l'extension, la profondeur et d'autres caractéristiques dudit défaut.

Dans le cas où le dispositif comporte une mémoire de données 97, lors d'une étape optionnelle 209, les nouvelles données relatives aux défauts détectés font l'objet d'une analyse de comparaison par rapport aux données précédemment stockées dans la mémoire de données 97. Cette comparaison aboutit à un suivi de l'évolution du défaut concerné.

Pour chaque défaut détecté, une alerte est ensuite générée (étape 208), cette dernière se traduisant par un message textuel et/ou graphique sur l'unité d'affichage 95 du calculateur central 92. Par exemple, l'unité d'affichage affiche une carte du réseau ferroviaire en signalant en temps réel, par un code couleur, les différents défauts et leurs emplacements sur le réseau. Une équipe de maintenance peut ainsi être envoyée rapidement aux endroits concernés.

Les différents niveaux de redondance permettent de confirmer la détection de défauts afin de limiter le nombre de faux positifs. Cela permet de déployer de manière optimale les équipes de maintenance sur le réseau.

## Revendications

1. Dispositif (10, 110) de détection de défauts d'un rail (12), comprenant :
- au moins un ensemble (18, 118) de capteurs (62, 64), chacun desdits capteurs étant apte à générer un signal électrique représentatif d'une distance (d_{n, i}) séparant ledit capteur et le rail, et
- au moins un véhicule ferroviaire (16) apte à se déplacer le long du rail ;
l'ensemble de capteurs étant assemblé au véhicule ferroviaire ; le véhicule ferroviaire étant configuré pour reposer sur le rail de sorte que lesdits capteurs soient disposés en regard et à distance dudit rail ;
le dispositif de détection comportant en outre un patin de frottement (40) comprenant une surface inférieure (42) sensiblement plane,
ledit patin de frottement étant assemblé (44, 144) au véhicule ferroviaire de manière à ce que le déplacement dudit véhicule le long du rail entraîne un glissement sur ledit rail de ladite surface inférieure, selon une direction longitudinale (X) dudit patin de frottement ;
le patin de frottement comprenant en outre au moins une cavité (54) ménagée dans la surface inférieure, l'au moins un ensemble (18, 118) de capteurs étant logé dans ladite cavité,
le dispositif de détection étant **caractérisé en ce qu'**il comprend en outre un dispositif (20) de traitement électronique d'informations fournies par les capteurs (62, 64), ledit dispositif de traitement comprenant : au moins un détecteur électronique (88) de coordonnées spatiales du véhicule ferroviaire (16) ; et au moins un contrôleur embarqué (89), ledit détecteur électronique et ledit contrôleur embarqué étant solidaires du véhicule ferroviaire (16), ledit contrôleur embarqué (89) étant connecté au détecteur électronique (88) et à l'ensemble (18, 118) de capteurs.

2. Dispositif de détection selon la revendication 1, dans lequel l'au moins un ensemble de capteurs comporte au moins un rang (70) de capteurs alignés selon une direction transversale (Y), perpendiculaire à la direction longitudinale du patin de frottement (40).

3. Dispositif de détection selon la revendication 1 ou la revendication 2, dans lequel l'au moins un ensemble de capteurs comporte plusieurs rangs (70), chaque rang étant formé de capteurs (62, 64) alignés selon une direction transversale (Y) perpendiculaire à la direction longitudinale du patin de frottement (40).

4. Dispositif de détection selon la revendication 3, dans lequel les capteurs (62, 64) de l'au moins un ensemble (18, 118) sont disposés selon un maillage régulier (72), formé de droites s'étendant selon la direction transversale (Y) et de droites s'étendant selon une direction (74) inclinée d'un angle (β) par rapport à ladite direction transversale, ledit angle (β) étant préférentiellement compris entre 45° et 90°.

5. Dispositif de détection selon l'une des revendications précédentes, dans lequel le patin de frottement comprend en outre au moins une rainure (78) ménagée dans la surface inférieure (42) selon la direction longitudinale (X), l'au moins une rainure débouchant sur l'au moins une cavité (54).

6. Dispositif de détection (110) selon l'une des revendications précédentes, dans lequel le patin de frottement est assemblé au véhicule ferroviaire par une suspension (44) munie de moyens de maintien fixes d'une position transversale constante d'au moins un ensemble (18, 118) de capteurs par rapport au chariot (30).

7. Dispositif de détection (110) selon l'une des revendications 1 à 5, dans lequel le patin de frottement est assemblé au véhicule ferroviaire par une suspension (144) munie de moyens de maintien par asservissement (80) d'une position transversale constante de l'au moins un ensemble (18, 118) de capteurs par rapport à un bord (14, 15) du rail.

8. Dispositif de détection selon l'une des revendications précédentes, dans lequel le dispositif de traitement (20) comporte plusieurs contrôleurs embarqués (89) solidaires d'un même véhicule ferroviaire (16) ou de plusieurs véhicules ferroviaires différents, chaque contrôleur embarqué (89) étant connecté à un ensemble (18, 118) de capteurs, le dispositif de traitement (20) comprenant en outre un calculateur centralisé (92) muni de moyens de communication avec chacun des calculateurs embarqués.

9. Procédé de fonctionnement d'un dispositif de détection selon l'une des revendications précédentes, ledit procédé comportant les étapes suivantes :
- déplacement du véhicule ferroviaire (16) le long du rail ;
- au cours dudit déplacement, mesure (200) d'une distance entre les capteurs (62, 64) de l'au moins un ensemble (18, 118) et une surface supérieure (13) du rail ; et détection simultanée (202) des coordonnées spatiales et de la vitesse du véhicule ; puis
- élaboration (204) d'une première représentation spatiale (R) de la surface supérieure (13) du rail ; puis
- comparaison (206) de ladite première représentation spatiale avec des représentations de référence afin d'identifier des défauts de la surface supérieure (13) ; puis
- génération d'une alerte (208) en cas de défaut identifié.

10. Procédé selon la revendication 9, comprenant en outre une étape (209) de comparaison de la première représentation spatiale (R) avec une seconde représentation spatiale précédemment mémorisée dans une mémoire de données (97), de sorte à conduire à un suivi de l'évolution des défauts de la surface supérieure (13).

11. Procédé selon l'une des revendications 9 ou 10, dans lequel les représentations de référence comprennent plusieurs types de défauts associés à des caractéristiques spatiales et dans lequel l'étape (206) de comparaison comprend la détermination de fenêtres d'analyse correspondant auxdites caractéristiques spatiales.

## Patentansprüche

1. Vorrichtung (10, 110) zur Detektion von Defekten einer Schiene (12), aufweisend:
- wenigstens eine Einheit (18, 118) von Sensoren (62, 64), wobei jeder der Sensoren imstande ist, ein elektrisches Signal zu erzeugen, das für einen Abstand (d_{n,i}) repräsentativ ist, welcher den Sensor und die Schiene trennt, und
- wenigstens ein Schienenfahrzeug (16), welches imstande ist, sich entlang der Schiene zu verlagern,
wobei die Einheit von Sensoren an dem Schienenfahrzeug montiert ist, wobei das Schienenfahrzeug konfiguriert ist zum Aufliegen auf der Schiene derart, dass die Sensoren gegenüber und im Abstand von der Schiene angeordnet sind,
wobei die Vorrichtung zur Detektion ferner aufweist eine Schleifkufe (40), die eine im Wesentlichen ebene untere Fläche (42) aufweist,
wobei die Schleifkufe an dem Schienenfahrzeug montiert ist (44, 144) in einer Weise, dass die Verlagerung des Fahrzeugs entlang der Schiene ein Gleiten der unteren Fläche auf der Schiene bewirkt entlang einer Längsrichtung (X) der Schleifkufe,
wobei die Schleifkufe ferner aufweist wenigstens eine Kavität (54), die in der unteren Fläche ausgebildet ist, wobei die wenigstens eine Einheit (18, 118) von Sensoren in der Kavität untergebracht ist,
wobei die Vorrichtung zur Detektion **dadurch gekennzeichnet ist, dass** sie ferner aufweist eine Vorrichtung (20) zur elektronischen Verarbeitung von Informationen, die von den Sensoren (62, 64) geliefert werden, wobei die Verarbeitungs-Vorrichtung aufweist: wenigstens einen elektronischen Detektor (88) von Raumkoordinaten des Schienenfahrzeugs (16), und wenigstens eine bordeigene Steuervorrichtung (89), wobei der elektronische Detektor und die bordeigene Steuervorrichtung fest am Schienenfahrzeug (16) sind, wobei die bordeigene Steuervorrichtung (89) mit dem elektronischen Detektor (88) und der Einheit (18, 118) von Sensoren verbunden ist.

2. Vorrichtung zur Detektion gemäß Anspruch 1, wobei die wenigstens eine Einheit von Sensoren aufweist wenigstens eine Reihe (70) von Sensoren, die ausgerichtet sind entlang einer Querrichtung (Y) senkrecht zu der Längsrichtung der Schleifkufe (40).

3. Vorrichtung zur Detektion gemäß Anspruch 1 oder Anspruch 2, wobei die wenigstens eine Einheit von Sensoren mehrere Reihen (70) aufweist, wobei jede Reihe gebildet ist von Sensoren (62, 64), die ausgerichtet sind entlang einer Querrichtung (Y) senkrecht zu der Längsrichtung der Schleifkufe (40).

4. Vorrichtung zur Detektion gemäß Anspruch 3, wobei die Sensoren (62, 64) der wenigstens einen Einheit (18, 118) angeordnet sind entlang eines gleichmäßigen Netzes (72), das gebildet ist von Geraden, die sich entlang der Querrichtung (Y) erstrecken, und von Geraden, die sich entlang einer Richtung (74) erstrecken, die um einen Winkel (β) bezüglich der Querrichtung geneigt ist, wobei der Winkel (β) bevorzugt zwischen 45° und 90° beträgt.

5. Vorrichtung zur Detektion gemäß einem der vorhergehenden Ansprüche, wobei die Schleifkufe ferner wenigstens eine Nut (78) aufweist, die in der unteren Fläche (42) entlang der Längsrichtung (X) ausgebildet ist, wobei die wenigstens eine Nut an der wenigstens einen Kavität (54) ausmündet.

6. Vorrichtung zur Detektion (110) gemäß einem der vorhergehenden Ansprüche, wobei die Schleifkufe an dem Schienenfahrzeug montiert ist über eine Aufhängung (44), die versehen ist mit fixen Mitteln zum Aufrechterhalten einer konstanten Querposition von wenigstens einer Einheit (18, 118) von Sensoren bezüglich des Wagens (30).

7. Vorrichtung zur Detektion (110) gemäß einem der Ansprüche 1 bis 5, wobei die Schleifkufe an dem Schienenfahrzeug montiert ist über eine Aufhängung (144), die versehen ist mit Mitteln zum Aufrechterhalten via Regelung (80) einer konstanten Querposition der wenigstens einen Einheit (18, 118) von Sensoren bezüglich einem Rand (14, 15) der Schiene.

8. Vorrichtung zur Detektion gemäß einem der vorhergehenden Ansprüche, wobei die Verarbeitungs-Vorrichtung (20) mehrere bordeigene Steuervorrichtungen (89) aufweist, die fest in einem selben Schienenfahrzeug (16) oder in mehreren unterschiedlichen Schienenfahrzeugen sind, wobei jede bordeigene Steuervorrichtung (89) mit einer Einheit (18, 118) von Sensoren verbunden ist, wobei Verarbeitungs-Vorrichtung (20) ferner einen Zentralrechner (92) aufweist, der mit Mitteln zur Kommunikation mit jedem der bordeigenen Rechner versehen ist.

9. Arbeitsverfahren einer Vorrichtung zur Detektion gemäß einem der vorhergehenden Ansprüche, wobei das Verfahren die folgenden Schritte aufweist:
- Verlagern des Schienenfahrzeugs (16) entlang der Schiene,
- im Laufe der Verlagerung Messen (200) eines Abstands zwischen den Sensoren (62, 64) der wenigstens einen Einheit (18, 118) und einer oberen Fläche (13) der Schiene, und simultanes Detektieren (202) der Raumkoordinaten und der Geschwindigkeit des Fahrzeugs, dann
- Erstellen (204) einer ersten räumlichen Darstellung (R) der oberen Fläche (13) der Schiene, dann
- Vergleichen (206) der ersten räumlichen Darstellung mit Referenzdarstellungen, um Defekte der oberen Fläche (13) zu identifizieren, dann
- Erzeugen eines Alarms (208) im Fall eines identifizierten Defekts.

10. Verfahren gemäß Anspruch 9, ferner aufweisend einen Schritt (209) des Vergleichens der ersten räumlichen Darstellung (R) mit einer vorausgehenden zweiten räumlichen Darstellung, die in einem Datenspeicher (97) gespeichert ist, um eine Nachverfolgung der Entwicklung von Defekten der oberen Fläche (13) zu erlangen.

11. Verfahren gemäß einem der Ansprüche 9 oder 10, wobei die Referenzdarstellungen mehrere Typen von Defekten umfassen, die mit räumlichen Charakteristiken verknüpft sind, und wobei der Schritt (206) des Vergleichens aufweist das Ermitteln von Analysefenstern korrespondierend zu den räumlichen Charakteristiken.

## Claims

1. A detection device (10, 110) for detecting rail (12) defects, comprising:
- at least one collection (18, 118) of sensors (62, 64), each of said sensors being able to generate an electrical signal indicative of a distance (d_{n,i}) separating said sensor and the rail, and
- at least one rail vehicle (16) able to move along the rail;
the collection of sensors being assembled to the rail vehicle; the rail vehicle being configured to rest on the rail in such a way that said sensors are positioned facing and some distance away from said rail;
the detection device further including a friction pad (40) comprising a substantially flat lower surface (42),
said friction pad being assembled (44, 144) to the rail vehicle in such a way that the movement of said vehicle along the rail causes a sliding on said rail by said lower surface, along a longitudinal direction (X) of said friction pad;
the friction pad further comprising at least one cavity (54) formed in the lower surface, the at least one collection (18, 118) of sensors being housed in said cavity
the detection device being **characterized in that** it further comprising an electronic processing device (20) for information provided by the sensors (62, 64), said device comprising at least one electronic detector (88) for spatial coordinates and at least one on board controller (89), said electronic detector and said on board controller being secured to the rail vehicle (16), said on board controller (89) being connected to the electronic detector (88) and to the collection (18, 118) of sensors..

2. The detection device according to claim 1, wherein the at least one collection of sensors comprises at least one row (70) of sensors aligned in a transverse direction (Y), perpendicular to the longitudinal direction of the friction pad (40).

3. The detection device according to claim 1 or claim 2, wherein the at least one collection of sensors comprises several rows (70), each row being formed by sensors (62, 64) aligned in a transverse direction (Y), perpendicular to the longitudinal direction of the friction pad (40).

4. The detection device according to claim 3, wherein the sensors (62, 64) of the at least one collection (18, 118) are arranged in a regular mesh (72), formed by lines extending in the transverse direction (Y) and lines extending in a direction (74) inclined by an angle (β)) relative to said transverse direction, said angle (β)) preferably being between 45° and 90°.

5. The detection device according to one of the preceding claims, wherein the friction pad further comprises at least one groove (78) arranged in the lower surface (42) in the longitudinal direction (X), the at least one groove emerging on the at least one cavity (54).

6. The detection device (110) according to any one of the preceding claims, wherein the friction pad is assembled to the rail vehicle by a suspension (44) provided with means for fixed maintenance of a constant transverse position of at least one collection (18, 118) of sensors relative to the wagon (30).

7. The detection device (110) according to one of claims 1 to 5, wherein the friction pad is assembled to the rail vehicle (144) by a suspension provided with means for maintenance by slaving (80) of a constant transverse position of the at least one collection (18, 118) of sensors relative to an edge (14, 15) of the rail.

8. The detection device according to any one of the preceding claims, wherein the processing device (20) includes several on board controllers (89) secured to a same rail vehicle (16) or several different rail vehicles, each on board controller (89) being connected to a collection (18, 118) of sensors, the processing device (20) further comprising a centralized logic controller (92) provided with means for communicating with each of the on board logic controllers.

9. An operating method for a detection device according to any one of the preceding claims, said method including the following steps:
- moving the rail vehicle (16) along the rail;
- during said movement, measuring (200) the distance between the sensors (62, 64) of the at least one collection (18, 118) and an upper surface (13) of the rail; and simultaneously detecting (202) spatial coordinates and the speed of the vehicle; then
- developing (204) a first spatial representation (R) of the upper surface (13) of the rail; then
- comparing (206) said first spatial representation with reference representations in order to identify defects of the upper surface (13); then
- generating an alert (208) in case of identified defect.

10. The method according to claim 9, further comprising a step (209) for comparing the first spatial representation (R) with a second spatial representation previously stored in a data memory (97), so as to lead to tracking of the evolution of the defects of the upper surface (13).

11. The method according to one of claims 9 or 10, wherein the reference representations comprise several types of defects associated with spatial characteristics and in which the comparison step (206) comprises determining analysis windows corresponding to said spatial characteristics.
